Europäisches Patentamt

(19) European Patent Office

Office européen des brevets

(11) Publication number: **0 443 998 A1**

(12) # EUROPEAN PATENT APPLICATION

(21) Application number: **91850018.2**

(51) Int. Cl.⁵: **B66F 9/18**

(22) Date of filing: **30.01.91**

(30) Priority: **23.02.90 FI 900938**

(43) Date of publication of application:
**28.08.91 Bulletin 91/35**

(84) Designated Contracting States:
**AT BE CH DE DK ES FR GB IT LI LU NL SE**

(71) Applicant: **AURAMO CARGO SYSTEMS OY**
**Valimotie**
**SF-01510 Vantaa (FI)**

(72) Inventor: **Merin, Peter**
**Laurinniityntie 19A 4**
**S-00440 Helsingfors (FI)**
Inventor: **Haapasalo, Pertti**
**Kimmeltie 13A 10**
**SF-02110 Espoo (FI)**

(74) Representative: **Bjellman, Lennart Olov Henrik**
**et al**
**DR. LUDWIG BRANN PATENTBYRA AB**
**Drottninggatan 7 Box 1344**
**S-751 43 Uppsala (SE)**

(54) **Procedure and apparatus for the handling of loads.**

(57)   Procedure and apparatus for the handling of loads (2) using jaws (6,7) pressed against the sides of the load. In the procedure of the invention, the slippage between the load (2) and the jaws (6,7) is measured and the compressive force of the jaws is adjusted on the basis of the slippage. The slippage is measured at least during a preliminary lifting performed before the load is lifted or at the beginning of the lifting operation. During the preliminary lifting the load can be lifted at an essentially lower speed than during the main lifting operation. The compressive force is increased during the preliminary lifting from a predetermined precompression value to at least a value at which the slipping ceases.

EP 0 443 998 A1

Fig.1

## PROCEDURE AND APPARATUS FOR THE HANDLING OF LOADS

The present invention relates to a procedure as defined in the introductory part of claim 1 and an apparatus as defined in the introductory part of claim 5 for the handling of loads.

At present, e.g. paper rolls may be handled using a gripper mounted on a forklift truck and having jaws which are hydraulically pressed against the load. The compressive force of the jaws can be adjusted manually e.g. to four different settings, depending on the load. Especially because of the rough adjustment of the compressive force, the load is often damaged due to excessive compression.

The object of the present invention is to eliminate the drawback referred to and to achieve a system for regulating the compressive force so as to optimize the compressive force needed. On the basis of the slippage between the load and the gripper jaws, the compressive force is adjusted in the manner stated in the characterizing clauses of claims 1 and 5, presented later.

In the following, the invention is described in detail by the aid of an example by referring to the attached drawings, in which

Fig. 1 presents a gripper.

Fig. 2 presents a diagram of the hydraulic system of the invention.

Fig. 3 presents a block diagram of the regulating system of the invention.

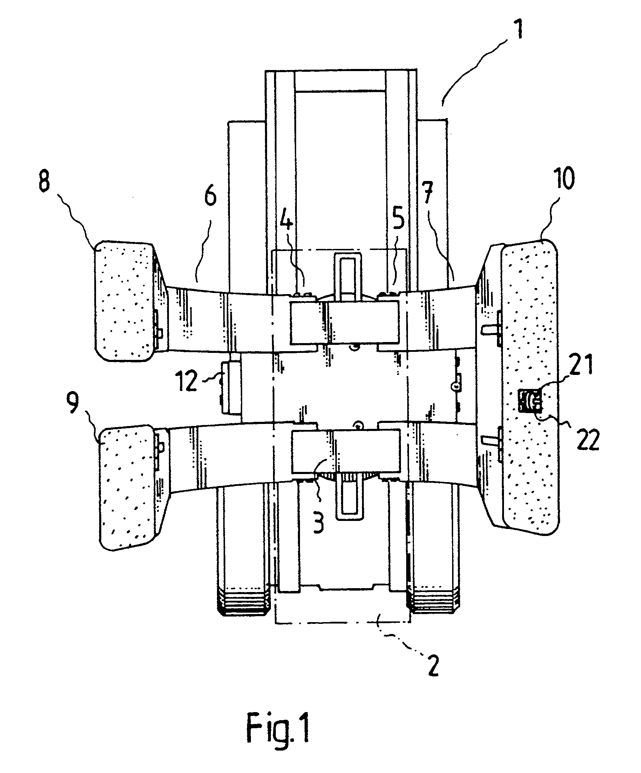

Fig. 1 shows a gripper designed for the lifting and moving of paper rolls 2 or other loads. The gripper, mounted e.g on a forklift truck, is provided with turnable jaws 6 and 7 attached to a frame 3, the fulcra of the jaws being located at points 4 and 5. One of the jaws is a divided one and the other a continuous jaw. The ends of the jaws are provided with plate-like, hinged jaw flaps 8 - 10 which grip the load. The frame accommodates a hydraulic system 11 comprising a rack-and-pinion gear and hydraulic cylinders for turning the jaws and a hydraulic valve 12 with an inbuilt overpressure protection.

According to the invention, the compressive force is adjusted on the basis of the slippage between the paper roll 2 and the jaw flaps 8 - 10 at the ends of the jaws 6 and 7.

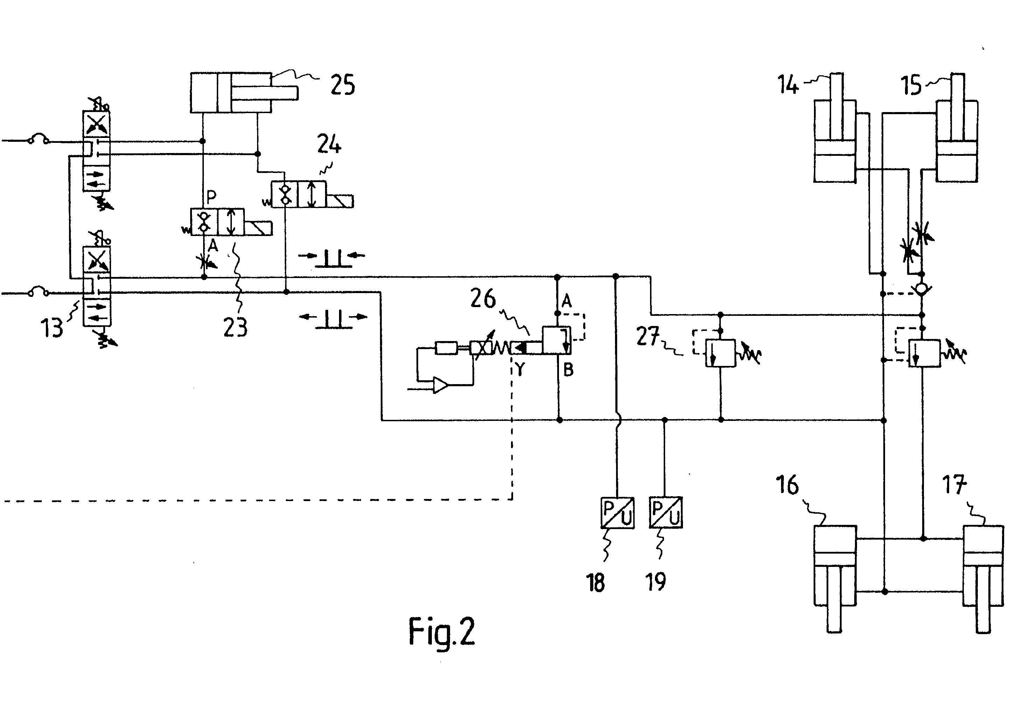

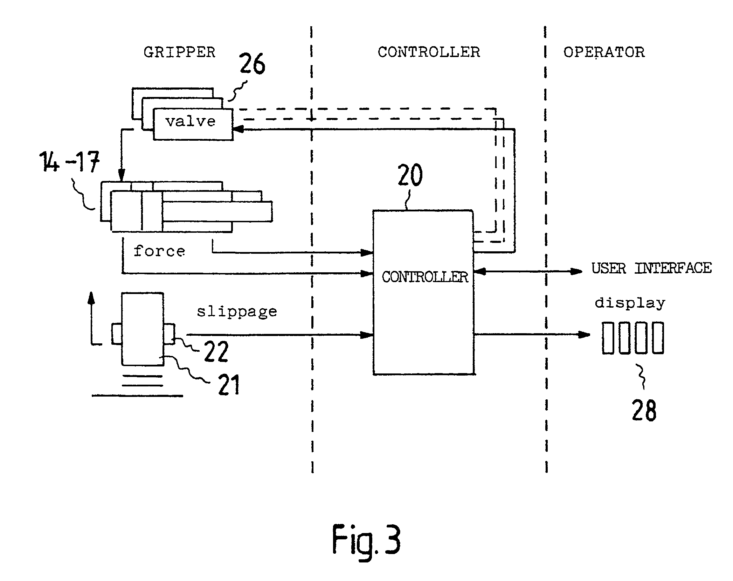

The operating cycle begins when the forklift truck brings the gripper onto the paper roll, placed in an upright position, so that the gripper jaws 6 and 7 come on opposite sides of the roll. Compression is started when the operator opens the manual valve 13 (Fig. 2). The oil now flows directly into the hydraulic cylinders (compressing cylinders) 14 - 17, causing the jaws 6 and 7 to turn until they touch the roll. When the pressure measured by pressure sensors 18 and 19 rises to a predetermined precompression value, the regulator (in the controller, Fig. 3) starts the measurement of the slippage. The slippage is measured by means of a pulse transducer 21 mounted on a jaw flap 10. The transducer is provided with a rubber roller 22 rotating on an axle and held in contact with the paper roll by a spring. As the roll slides relative to the jaw flap 10, the roller 22 rotates and the pulse transducer measures the relative movement in terms of a pulse count.

Simultaneously with the slippage measurement, a slow lifting action (preliminary lifting) is started. The regulator opens the magnetic valves 23 and 24, permitting some oil to flow into the lifting cylinder 25 of the forklift truck. The slow lifting motion enables the slippage to be detected. The forklift truck lifts the gripper slowly and the roll remains at first unmoved. The valves 23 and 24 may also be connected in a different way from Fig. 2.

Based on the slippage, the regulator controls a pressure limiter type proportional valve 26 which limits the pressure admitted into the cylinders 14 - 17 in accordance with its control voltage. The pressure can never rise beyond the value to which the mechanical, spring-loaded pressure limiting valve 27 has been adjusted. The pressure is increased until the gripper holds the roll fast and no slipping occurs. When this is the case, the regulator stops increasing the pressure and an indicator light 28 or equivalent signals the operator that the compression has been completed. The operator may then close the manual valve 13. After this, the operator may lift or turn the roll 2 and drive the forklift truck 1 as required.

It is also possible to optimize the compressive force during the whole load handling operation, comprising the main lifting operation, the transfer and the lowering of the load. In this case, the slippage is measured continuously and, if the roll 2 starts slipping, the pressure between the jaws 6 and 7 is increased automatically until no slipping occurs.

It is obvious to a person skilled in the art that the invention is not restricted to the example described above, but that it may instead be varied within the scope of the following claims. The regulation of the compressive force can be implemented as provided by the invention regardless of the structure of the jaws, e.g. in the case of a gripper provided with two or more divided jaws and having a linear jaw motion. Moreover, the system regulating the compressive force may comprise two more transducers e.g. if the system has been designed for simultaneous handling of several paper rolls.

## Claims

1. Procedure for the handling of loads (2) such as paper rolls, using jaws (6,7) pressed against the sides of the load, in which procedure the slippage between the load (2) and the jaws (6,7) is measured and the compressive force of the jaws is adjusted on the basis of the slippage, **characterized** in that the slippage is measured at least during a preliminary lifting performed before or at the beginning of the main lifting operation, said preliminary lifting being started when the compressive force reaches a predetermined precompression value, and that the compressive force is increased during the preliminary lifting from the precompression value at least to a value where the slipping ceases.

2. Procedure according to claim 1, **characterized** in that the lifting motion during the preliminary lifting is substantially slower than during the main lifting operation.

3. Procedure according to claim 1 or 2 for the handling of loads (2) using jaws (6,7) operated hydraulically by means of one or more hydraulic cylinders (14-17), in which procedure the load can be lifted using a lifting device (1) operated hydraulically by means of one or more lifting cylinders (25), **characterized** in that the preliminary lifting is performed by admitting a flow of hydraulic fluid into the lifting cylinder (25), and that, when the slipping ceases, the preliminary lifting is stopped by shutting of the flow of hydraulic fluid into the lifting cylinder.

4. Procedure according to any one of the preceding claims, **characterized** in that the slippage is monitored and the compressive force is adjusted essentially during the whole load handling operation.

5. Apparatus implementing the procedure of claim 1 for the lifting of loads (2) such as paper rolls by means of jaws (6,7) pressed together hydraulically by one or more hydraulic cylinders (14-17), which load can be lifted using a lifting device (1) operated hydraulically by means of one or more lifting cylinders (25), said apparatus being provided with at least one measuring device (21,22) for measuring the slippage between the load (2) and the jaws (6,7) and with a control unit (20) for adjusting the compressive force of the jaws on the basis of the slippage, **characterized** in that the apparatus is provided with at least one pressure sensing device (18,19) for measuring the pressure of the hydraulic fluid flowing into the hydraulic cylinder, that the control unit causes the measuring device to measure the slippage at least during the preliminary lifting performed before the lifting of the load or at the beginning of the lifting operation, the preliminary lifting being sarted when the compressive force reaches a predetermined precompression value, and that the control unit increases the compressive force during the preliminary lifting from the precompression value to at least a value at which the slipping ceases.

6. Apparatus according to claim 5, **characterized** in that, to allow preliminary lifting before or at the beginning of the lifting operation, the apparatus is provided with one or more valves (23,24) which admit a flow of hydraulic fluid into the lifting cylinder (25), and that the apparatus is provided with a pressure limiting valve (26) to limit the pressure of the hydraulic fluid admitted into the hydraulic cylinders (14-17) at the end of the slippage.

7. Apparatus according to claim 5 or 6, **characterized** in that it comrpises a manual control device (13) by means of which the operator may start and end the compression stage, and an indicator light (28) or equivalent for indicating the end of the compression stage.

8. Apparatus according to any one of claims 5 - 7, **characterized** in that the device measuring the slippage is so mounted on a jaw flap (10) at the end of a jaw that it comes into contact with the load.

Fig.1

Fig.2

GRIPPER  26

CONTROLLER

OPERATOR

valve

14 -17

20

force

CONTROLLER

USER INTERFACE

display

slippage

22

21

28

# Fig. 3

European Patent
Office

**EUROPEAN SEARCH REPORT**

Application Number

EP 91 85 0018

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 636 473 (M.A.N.) <br> * Page 5, paragraphs 2,3; pages 6,7; page 8, paragraph 1 * | 1 | B 66 F    9/18 |
| Y | | 3,4,5,8 | |
| Y | DE-A-3 245 715 (BAUAKADEMIE DER DDR) <br> * Complete document * | 3,4,5,8 | |
| X | COMPUTERS IN INDUSTRY, vol. 11, no. 2, January 1989, pages 119-133, Amsterdam, NL; D. BROWN et al.: "Design amd implementation of a computer-controlled sensor-equipped robot end effector" <br> * Page 130, right-hand column, last but one paragraph * | 1,4 | |
| A | IDEM | 5 | |
| A | EP-A-0 112 729 (TOKYO SHIBAURA DENKI K.K.) | | |
| A | GB-A-2 166 710 (THE ENGLISH ELECTRIC CO.) | | TECHNICAL FIELDS SEARCHED (Int. Cl.5) <br><br> B 66 F <br> B 66 C <br> B 25 J |
| A | US-A-4 783 106 (NUTTER) | | |
| A | US-A-4 742 468 (OHASHI) | | |

The present search report has been drawn up for all claims

| Place of search | Date of completion of the search | Examiner |
|---|---|---|
| THE HAGUE | 23-05-1991 | VAN DEN BERGHE E.J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)